# EUROPÄISCHE PATENTANMELDUNG

(11) **EP 2 175 211 A2**
(43) Veröffentlichungstag der Anmeldung: **14.04.2010**
(21) Anmeldenummer: 09172756.0
(22) Anmeldetag: 12.10.2009
(51) Int. Cl.: F24J 2/20

(54) **Solarabsorbermodul und Wärmetauscher**

(30) Priorität: 10.10.2008 DE 102008052010
(71) Anmelder: Joma-Polytec Kunststofftechnik GmbH, 72411 Bodelshausen (DE)
(72) Erfinder: Heinz, Stefan, 72411 Bodelshausen (DE); Müller, Axel, Dr., 79102 Freiburg (DE)
(74) Vertreter: Dreiss

(57) **Zusammenfassung**

Die Erfindung betrifft ein Solarabsorbermodul mit Kanälen zur Führung eines Wärmemittels wobei zwei aufeinander angeordnete Gehäuseplatten vorgesehen sind, wobei wenigstens eine Gehäuseplatte Vertiefungen zur Bildung der Kanäle aufweist. Die Erfindung betrifft außerdem Herstellverfahren für ein Solarabsorbermodul sowie einen Wärmetauscher.

## Beschreibung

Die Erfindung betrifft ein Solarabsorbermodul mit Kanälen zur Führung eines Wärmemittels. Derartige Module sind aus dem vorbekannten Stand der Technik in vielfältiger Art und Weise bekannt. Das Wärmemittel wird dabei in den Kanälen, die als Absorberrohre ausgebildet sein können, aufgrund von Sonneneinstrahlung erwärmt.

Der vorliegenden Erfindung liegt die Aufgabe zugrunde, eingangs genannte Solarabsorbermodule bereitzustellen, die einen einfachen Aufbau aufweisen und dennoch funktionssicher arbeiten.

Diese Aufgabe wird durch ein Solarabsorbermodul mit den Merkmalen des Anspruchs 1 gelöst. Ein solches Solarabsorbermodul sieht folglich vor, dass wenigstens zwei aufeinander angeordnete Gehäuseplatten vorgesehen sind, wobei wenigstens eine Gehäuseplatte Vertiefungen zur Bildung der Kanäle aufweist. Aufgrund der Vertiefungen, die wenigstens in einer Gehäuseplatte vorgesehen sind und die die Kanäle bilden, können beim erfindungsgemäßen Solarabsorbermodul Rohre zur Bildung der Kanäle entfallen. Vielmehr werden durch Aufeinandersetzen beziehungsweise Aufeinanderanordnen der schalenartig ausgeführten Gehäuseplatten die Kanäle zur Führung des Wärmemittels gebildet. Die Gehäuseplatten können dabei insbesondere aus Kunststoff sein und beispielsweise als tiefgezogene oder als im Pressverfahren hergestellte Bauteile ausgebildet sein. Als Wärmemittel kann insbesondere ein Gas oder eine Flüssigkeit Verwendung finden. Vorteilhafterweise ist denkbar, dass beide Gehäuseplatten auf den einander zugewandten Seiten einander gegenüberliegende Vertiefungen zur Bildung der Kanäle aufweisen. Hierdurch können die Kanäle einen vergleichsweise großen Strömungsquerschnitt vorsehen, ohne dass die Vertiefungen in einer Gehäuseplatte unverhältnismäßig groß ausfallen.

Die von den Gehäuseplatten gebildeten Kanäle können einen Zuführkanal, davon abzweigende, insbesondere parallel zueinander verlaufende Absorberkanäle und/oder einen sich an die Absorberkanäle anschließenden Sammelkanal umfassen. Erfindungsgemäß ist allerdings auch denkbar, dass die durch die Vertiefungen gebildeten Kanäle lediglich den Zuführkanal, die Absorberkanäle oder den Sammelkanal bilden.

Ferner ist denkbar, dass der Zuführkanal ein sich in Durchflussrichtung verkleinernden Querschnitt und/oder der Abführkanal einen sich in Durchflussrichtung vergrößernden Querschnitt aufweist. Der Zuführkanal und/oder der Abführkanal kann dabei im Wesentlichen einen rechteckförmigen Querschnitt mit einer Höhe und einer Breite aufweisen, wobei die Höhe und/oder die Breite in Durchflussrichtung wenigstens abschnittsweise kontinuierlich abnehmen. Insbesondere kann die Höhe wenigstens abschnittsweise konstant bei abnehmender Breite verlaufend ausgebildet sein.

Der Zuführkanal und/oder der Sammelkanal können zwei im Wesentlichen parallel zueinander verlaufende und wenigstens in ihren Endbereich miteinander verbundene Kanalabschnitte aufweisen, wobei dann die Absorberkanäle mit dem zweiten Kanalabschnitt verbunden sind.

Bei einer weiteren Ausgestaltung der Erfindung ist denkbar, dass die aufeinander angeordneten Gehäuseplatten wenigstens weitgehend spiegelsymmetrisch zueinander ausgebildet sind. Die Vertiefungen an der einen Gehäuseplatte entsprechen folglich den Vertiefungen an der anderen Gehäuseplatte. Insofern werden die Kanäle durch Vertiefungen in jeweils beiden Gehäuseplatten gebildet.

Eine weitere vorteilhafte Ausgestaltung der Erfindung sieht vor, dass Absorberkanäle vorgesehen sind, die zur Vergrößerung der Einstrahloberfläche einen gebogenen, insbesondere einen ovalförmigen Querschnitt vorsehen.

Die Querschnitte der Absorberkanäle können insbesondere eine ovale oder rechteckige Kontur mit einer Breite und einer Höhe aufweisen, wobei das Verhältnis Breite/Höhe im Bereich von 5/1 bis 20/1 und insbesondere im Bereich von 10/1 liegt. Konkret können die Breite im Bereich von 30 mm und die Höhe im Bereich von 3 mm liegen.

Ferner ist denkbar, dass Absorberkanäle vorgesehen sind, die zur verbesserten Durchmischung des Wärmemittels eine beispielsweise in oder quer zur Strömungsrichtung verlaufende wellenartige oder geschlängelte Kontur aufweisen.
Der Bereich zwischen zwei benachbart angeordneten Absorberkanälen kann erfindungsgemäß wärmemittelundicht ausgebildet sein, das heißt die Gehäuseplatten liegen im Bereich zwischen den Absorberkanälen, das Wärmemittel nicht abdichtend, aneinander an. Folglich kann Wärmemittel insbesondere quer zur Hauptströmungsrichtung des Wärmemittels von einem Absorberkanal in den benachbarten Absorberkanal gelangen. Hierdurch kann eine zusätzliche Durchmischung des Wärmemittels erreicht werden.

Erfindungsgemäß ist allerdings auch denkbar, dass die Gehäuseplatten benachbart angeordnete Absorberkanäle wärmemitteldicht voneinander abtrennen. Eine Dichtheit kann beispielsweise durch Verschweißen oder Verkleben der aneinander anliegenden Gehäuseplatten im Bereich zwischen den Absorberkanälen erreicht werden. Ferner ist denkbar, dass zusätzliche Dichtabschnitte oder Dichtmittel zwischen den Gehäuseplatten angebracht werden.

Gemäß einer weiteren Ausgestaltung der Erfindung ist vorteilhaft, wenn ein Rahmen und/oder Rahmenabschnitte zur gegenseitigen Fixierung der Gehäuseplatten vorgesehen sind. Auf diese Art und Weise können die Gehäuseplatten zur Bildung der Kanäle dauerhaft miteinander gefügt werden.

Insbesondere ist denkbar, dass zwischen zwei benachbarten Absorberkanälen ein Rahmenabschnitt vorgesehen ist, um die Gehäuseplatten miteinander zu verbinden. Durch Vorsehen des Rahmenabschnitts kann zudem gewährleistet werden, dass ein dichtes Anliegen der Gehäuseplatten im Bereich des Rahmenabschnitts erzielt wird.

Der Rahmen und/oder die Rahmenabschnitte sind vorzugsweise aus geschäumtem oder gespritztem Rahmenmaterial. Derartiges Rahmenmaterial kann vergleichsweise einfach eingebracht werden und kann zudem geeignete Materialeigenschaften aufweisen. Insbesondere PUR hat sich hierbei als geeignet herausgestellt.

Dabei ist denkbar, dass die Gehäuseplatten in den Bereichen, in denen Rahmenmaterial vorgesehen ist, vom Rahmenmaterial durchdrungene Fixieraussparungen aufweisen. Hierdurch kann gewährleistet werden, dass über das Rahmenmaterial eine ausreichende Fixierung der Gehäuseplatten ermöglicht wird.

Um Zuführ- oder Abführleitungen an das erfindungsgemäße Modul anschließen zu können, ist denkbar, dass Anschlusseinlagen zwischen den Gehäuseplatten und/oder im Rahmenmaterial vorgesehen sind. Diese Anschlusseinlagen können insbesondere aus einem metallischen Material sein und beispielsweise als Metall-Inserts ausgebildet sein.

Der Rahmen kann insbesondere so ausgebildet sein, dass er die Gehäuseplatten an den freien Kanten einfasst und zudem vorzugsweise einen wenigstens abschnittsweise umlaufenden Auflageabschnitt zur Auflage eines Solarglases aufweist. Der Rahmen hat folglich hierbei mehrere Funktionen. Zum einen dient er zur gegenseitigen Fixierung der Gehäuseplatten. Ferner dient er zur Einfassung der Gehäuseplatten. Zudem dient er als Anlage für das Solarglas.

Zudem ist denkbar, dass der Rahmen auch auf der dem Solarglas abgewandten Unterseite eine Rückwand aufweist oder Anlageabschnitte für eine Rückwand vorsieht. Zur Erzielung eines guten Wirkungsgrades ist denkbar, dass eine Dämmung zwischen den Gehäuseplatten und der Rückwand vorgesehen wird.

Die Gehäuseplatten können insbesondere eine konstante Wandstärke aufweisen und aus Kunststoff oder auch aus Metallblech sein.

Die Erfindung betrifft außerdem ein Herstellverfahren für ein erfindungsgemäßes Solarabsorbermodul, bei dem zwei Vertiefungen aufweisende Gehäuseplatten zur Bildung von Kanälen aufeinander gesetzt werden und die beiden Gehäuseplatten mittels eines gespritzten oder geschäumten Rahmens und/oder mittels gespritzten oder geschäumten Rahmenabschnitten dauerhaft miteinander verbunden werden. Der Rahmen kann dabei die freien Kanten der beiden Platten einfassen. Ferner kann das Rahmenmaterial der Rahmenabschnitte in den Platten vorgesehene Fixieraussparungen durchdingen.

Insgesamt wird eine dauerhafte, aneinander anliegende Anordnung der beiden Platten gewährleistet, ohne dass in das Modul einströmendes beziehungsweise aus den Modul ausströmendes Wärmemittel das Modul ungewollt verlassen kann.

Die erfindungsgemäßen Absorbermodule eignen sich auch zur Herstellung eines Wärmetauschers. Ein derartiger Wärmetauscher umfasst wenigstens zwei erfindungsgemäße Solarabsorbermodule, wobei die Module derart beabstandet aufeinander angeordnet werden, dass nicht nur in den Kanälen der jeweils beiden Solarabsorbermodule ein Wärmemittel hindurchströmt, sondern dass auch ein Medium zwischen den beiden Solarabsorbermodulen hindurchströmen kann. Aufgrund einer derartigen Anordnung kann folglich Wärme ausgetauscht werden zwischen dem Wärmemittel und dem Medium. Insbesondere kann die Anordnung derart sein, dass die Hauptströmungsrichtung des Wärmemittels quer zur Hauptströmungsrichtung des Mediums erfolgt. Ein derartiger Wärmetauscher arbeitet folglich im Kreuzstromprinzip.

Weitere Einzelheiten und vorteilhafte Ausgestaltungen der Erfindung sind der nachfolgenden Beschreibung zu entnehmen, anhand derer die in den Figuren dargestellten Ausführungsbeispiele der Erfindung näher beschrieben und erläutert werden.

### Es zeigen:

- Figur 1: zwei aufeinander angeordnete Gehäuseplatten eines erfindungsgemäßen Solarabsorbers;
- Figur 2: die Gehäuseplatten gemäß Figur 1 mit einem Rahmen und Rahmenabschnitten;
- Figur 3: und
- Figur 4: Querschnitte durch verschiedene Ausführungsformen von Modulen;
- Figur 5: eine vergrößerte Teilansicht des Moduls gemäß Figur 2;
- Figur 6: eine vergrößerte Ansicht eines Ausschnitts aus Figur 5;
- Figur 7: das Modul gemäß Figur 2 mit Rahmen und Bodenplatte;
- Figur 8: einen Querschnitt eines Ausschnitts aus Figur 7;
- Figur 9: einen Schnitt durch einen erfindungsgemäßen Wärmetauscher.

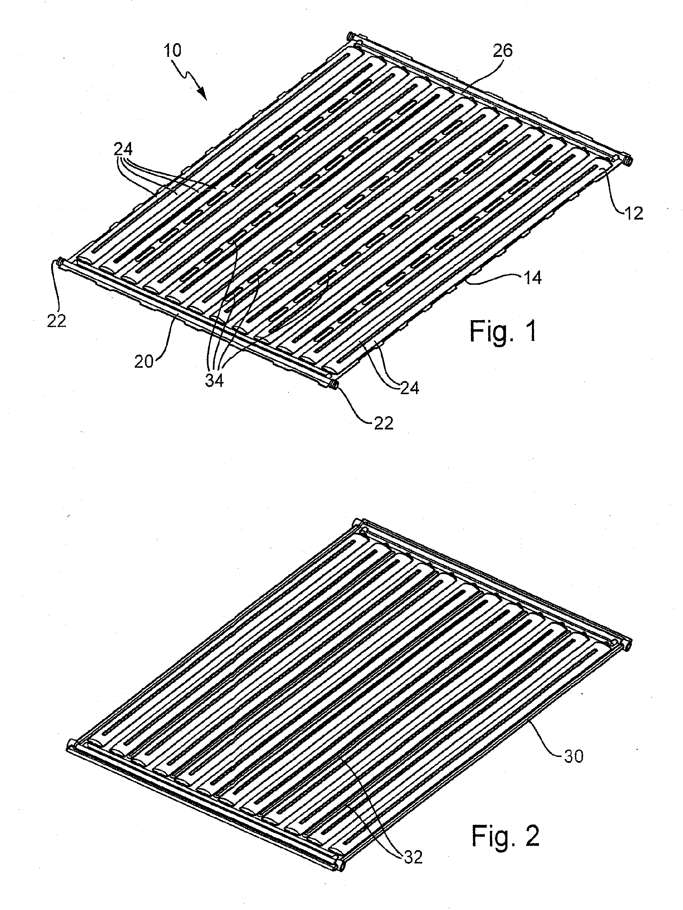

In der Figur 1 ist ein erfindungsgemäßes Solarabsorbermodul 10 dargestellt, das zwei aufeinander angeordnete Gehäuseplatten 12 und 14 aufweist. Die Gehäuseplatten 12 und 14 sind aus Kunststoff hergestellt. Die Gehäuseplatten weisen Vertiefungen 16 auf, durch welche Kanäle 18 gebildet werden. Insgesamt sind drei verschiedene Arten von Kanälen 18 vorgesehen. Über einen Zuführkanal 20, der an seinen freien Enden Anschlüsse 22 vorsieht, kann ein Wärmemittel in das Modul einströmen. Vom Zuführkanal 20 zweigen quer dazu verlaufende Absorberkanäle 24 ab. Die Absorberkanäle 24 enden in einem gemeinsamen Sammelkanal 26, der ebenfalls an seinen freien Enden Anschlüsse 28 vorsieht. Im Betrieb des Moduls 10 fällt Sonnenlicht auf die Absorberkanäle 24, wodurch sich ein in den Absorberkanälen 24 geführtes Wärmemittel erwärmt.

Zur gegenseitigen Fixierung der beiden Gehäuseplatten 12 und 14 ist, wie aus Figur 2 deutlich wird, ein die Gehäuseplatten 12 und 14 einfassender Rahmen 30 vorgesehen. Ferner sind im Bereich zwischen Absorberleitungen 24 sich in Richtung der Absorberleitungen 24 erstreckende Rahmenabschnitte 32 vorgesehen. Der Rahmen 30 sowie die Rahmenabschnitte 32 sind vorzugsweise aus dem gleichen Material. Als vorteilhaft hat sich herausgestellt, den Rahmen und die Rahmenabschnitte 32 durch ein geschäumtes Material zu realisieren, wie beispielsweise durch PUR. In den Bereichen, in denen die Rahmenabschnitte vorgesehen sind, weisen die Platten 12 und 14, wie aus Figur 1 deutlich wird, Fixieraussparungen 34 auf. Das Rahmenmaterial der Rahmenabschnitte 32 durchdringt dabei im endmontierten Zustand die Fixieraussparungen 34. Hierdurch, und durch das Einfassen der freien Kanten der beiden Platten 12 und 14 durch den Rahmen 30, wird eine dauerhafte, aneinander anliegende Anordnung der beiden Platten 12 und 14 gewährleistet. Zudem wird gewährleistet, dass kein in die Anschlüsse 22 einströmendes beziehungsweise aus den Anschlüssen 28 ausströmendes Wärmemittel das Modul ungewollt verlassen kann.

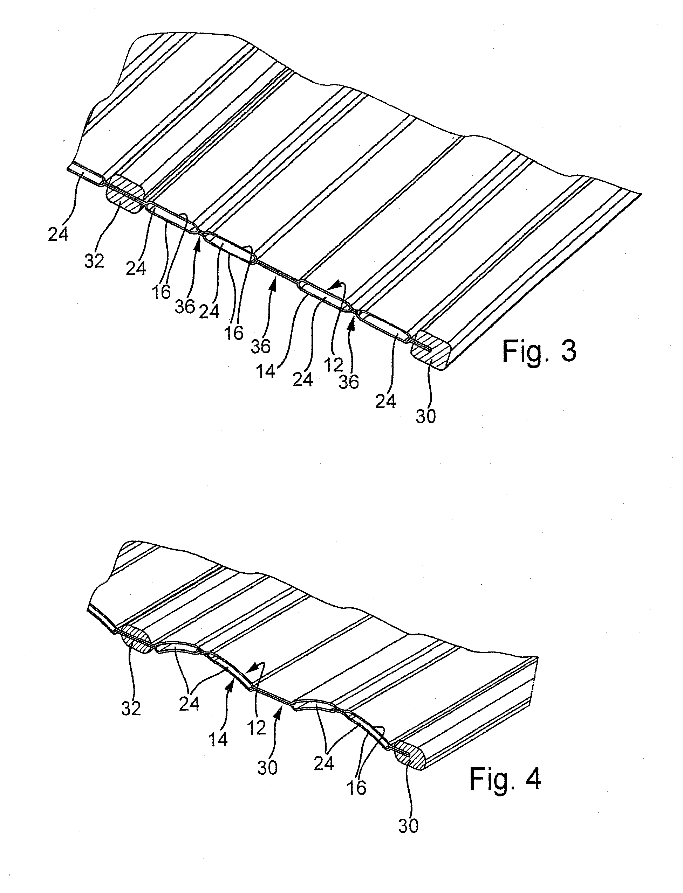

Aus dem Schnitt gemäß Figur 3 wird deutlich, dass die beiden Platten 12 und 14 komplementär zueinander bzw. spiegelsymmetrisch zur gemeinsamen Anlagenebene ausgebildet sind. Vertiefungen 16 der Gehäuseplatte 14 sind Vertiefungen 16 der Gehäuseplatte 12 gegenüberliegend angeordnet, so dass jeweils ein Kanal 24 von Vertiefungen 16 in beiden Platten gebildet wird. Erfindungsgemäß wäre auch denkbar, dass eine der Platten 12, 14 als ebene Platte ausgebildet ist und Vertiefungen 14 lediglich in der anderen Gehäuseplatte zur Realisierung der Kanäle vorgesehen sind.

Aus Figur 3 wird ferner deutlich, dass im Bereich zwischen zwei benachbarten Absorberkanälen 24 die beiden Platten 12 und 14 aneinander anliegen. Diesbezügliche Bereiche sind mit den Bezugszeichen 30 beispielhaft angedeutet. Erfindungsgemäß ist denkbar, dass die beiden Platten 12 und 14 in den Bereichen 30 lediglich aneinander anliegen, so dass ein bedingtes Durchströmen von Wärmemittel von einem Absorberkanal zu einem neben diesem Absorberkanal liegenden Absorberkanal 24 möglich ist. Eine bedingte Querströmung kann erfindungsgemäß folglich toleriert werden. Andererseits ist denkbar, dass in den Bereichen 30 die Gehäuseplatten 12 und 14 wenigstens bedingt Wärmemitteldicht aneinander anliegen. Dies kann beispielsweise durch ein Verkleben oder Verschweißen der Platten 12 und 14 in den Bereichen 30 erfolgen.

Der jeweilige Querschnitt der Absorberkanäle 24 ist bei der Ausführungsform gemäß Figur 3 im Wesentlichen länglich.

Bei der Ausführungsform gemäß Figur 4, bei der der Figur 3 entsprechende Bauteile mit entsprechenden Bezugszahlen versehen sind, verlaufen die Querschnitte der Absorberkanäle 24 bogenförmig. Hierdurch ergibt sich eine vergrößerte Oberfläche der Absorberkanäle 24, wodurch mehr Sonnenenergie aufgenommen werden kann.

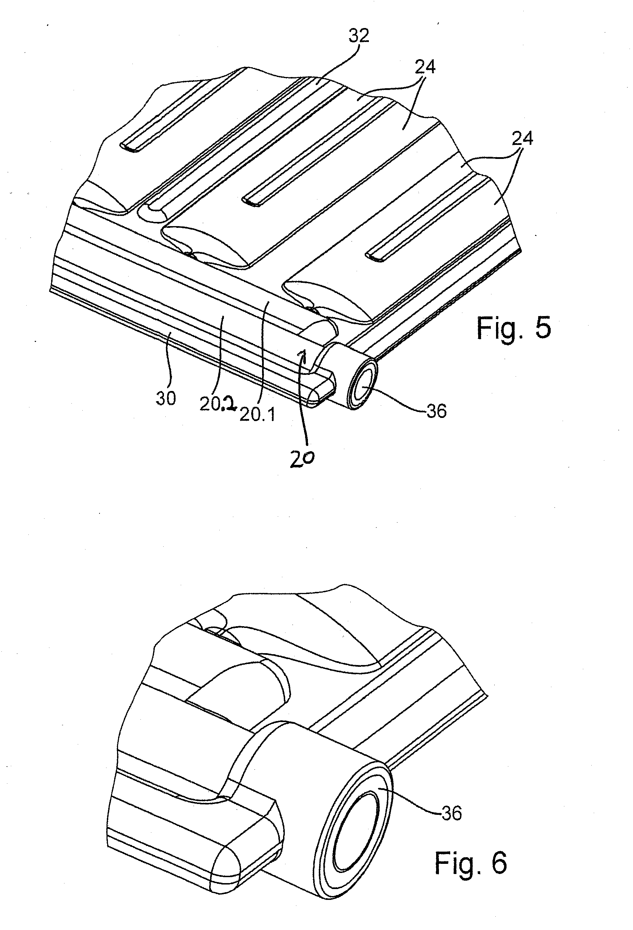

Bei der vergrößerten Ansicht gemäß Figur 5 ist deutlich erkennbar, dass der Zuführkanal 20 einen parallel dazu verlaufenden Zuführkanal 20.1 vorsieht, von dem die Absorberkanäle 24 abzweigen. Der Zuführkanal (20), und auch der Sammelkanal 26 weist also zwei im Wesentlichen parallel zueinander verlaufende und wenigstens in ihren Endbereich miteinander verbundene Kanalabschnitte 20.1, 20.2 auf, wobei die Absorberkanäle 24 jeweils mit dem zweiten Kanalabschnitt 20.1 verbunden sind. Dies hat den Vorteil, dass bei Hintereinanderschaltung von mehreren Modulen 10, wie sie in Figur 1 und 2 gezeigt werden, eine gleichmäßigere Verteilung von Wärmemittel hin zu den Absorberkanälen bereitgestellt werden kann.

Wie aus Figur 5 und auch der Vergrößerung gemäß Figur 6 deutlich wird, sind an den Anschlüssen 22 und auch an den Anschlüssen 24, Anschlusseinlagen 36, die insbesondere als Metall-Inserts ausgebildet sein können, vorgesehen. Diese Anschlusseinlagen 36 sind vorzugsweise vom Rahmen 30 dichtend umgeben. Die Anschlusseinlagen 36 können beispielsweise ein Gewinde vorsehen, an welches eine Zuführ- der Abführleitung angeschlossen werden kann.

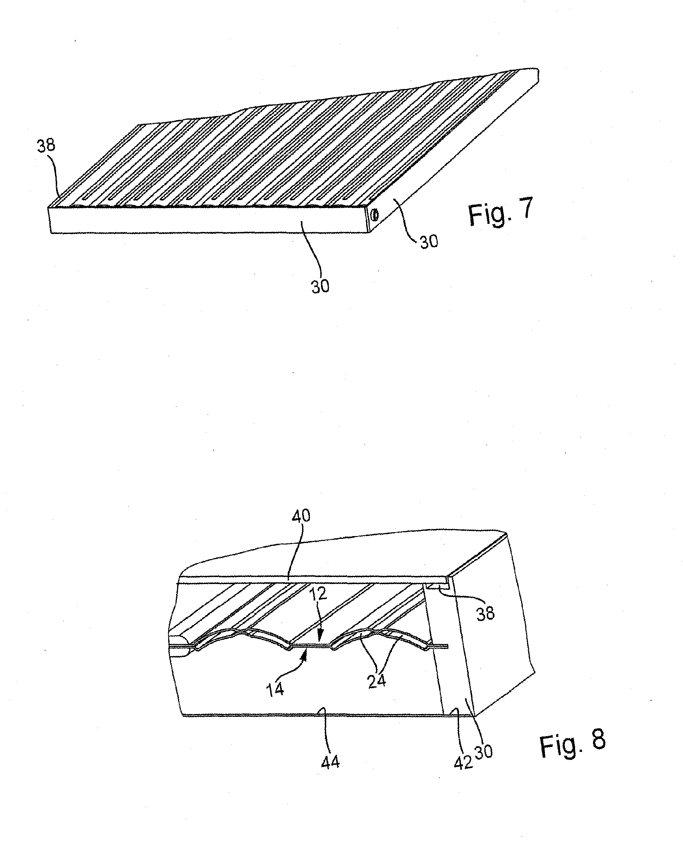

Bei der Ausführungsform gemäß Figur 7 ist der Rahmen 30 derart ausgebildet, dass er auf seiner Oberseite einen Auflageabschnitt 38 aufweist, auf welchem ein Solarglas 40 zur Auflage kommen kann. Ein derartiges Solarglas 40 ist beispielsweise in Figur 8 deutlich zu erkennen. Auf der Unterseite des Rahmens 30 ist, wie ebenfalls aus Figur 8 deutlich wird, ein Anlageabschnitt 42 vorgesehen, an dem im endmontierten Zustand eine Rückwand 44 des Moduls angeordnet ist. Zwischen den Gehäuseplatten 12 und 14 und der Rückwand 44 kann zusätzlich ein wärmedämmendes Material vorgesehen sein.

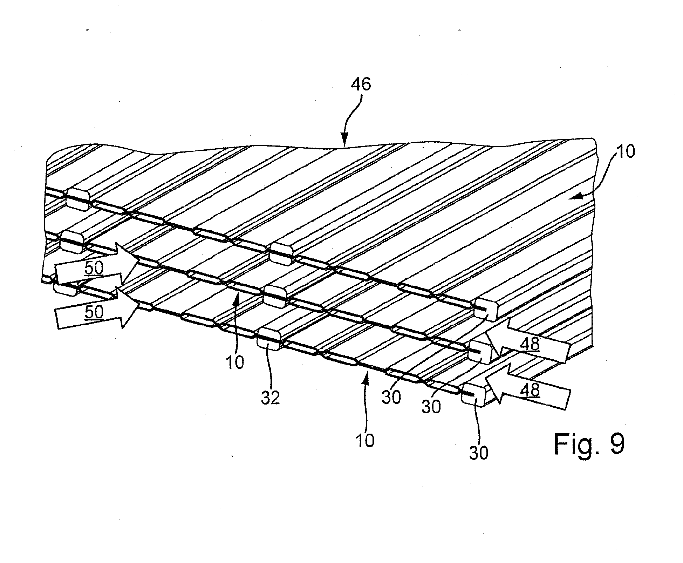

In Figur 9 ist ein Ausschnitt aus einem Wärmetauscher 46 gezeigt, der insgesamt drei Module 10, wie sie in Figur 1 und 2 dargestellt sind, vorsieht. Die Module 10 sind dabei derart beabstandet zueinander angeordnet, dass zwischen den Modulen 10 ein Medium hindurchströmen kann. Die Durchströmrichtung des Mediums ist beispielsweise durch die Pfeile 48 angedeutet. Insbesondere quer dazu kann das in den Modulen 10 strömende Wärmemittel in den entsprechenden Absorberkanälen 24 geführt werden. Die Strömungsrichtung des Wärmemittels ist dabei durch die Pfeile angedeutet. Durch einen derartigen Aufbau kann ein mehrschichtiger Wärmetauscher 10 realisiert werden, der auf dem Kreuzstromprinzip basiert. Als Wärmemittel kann insbesondere eine Flüssigkeit Verwendung finden. Als Medium welches zwischen den Modulen 10 hindurchströmt, kann insbesondere Luft Verwendung finden.

## Patentansprüche

1. Solarabsorbermodul (10) mit Kanälen (18, 20, 24, 26) zur Führung eines Wärmemittels, **dadurch gekennzeichnet, dass** wenigstens zwei aufeinander angeordnete Gehäuseplatten (12, 14) vorgesehen sind, wobei wenigstens eine Gehäuseplatte Vertiefungen (16) zur Bildung der Kanäle (18, 20, 24, 26) aufweist, und wobei die von den Gehäuseplatten (12, 14) gebildeten Kanäle (18) einen Zuführkanal (20), davon abzweigende Absorberkanäle (24) und/oder einen sich an die Absorberkanäle (24) anschießenden Sammelkanal (26) umfassen.

2. Modul (10) nach Anspruch 1, **dadurch gekennzeichnet, dass** der Zuführkanal (20) ein sich in Durchflussrichtung verkleinernden Querschnitt und/oder Sammelkanal (26) einen sich in Durchflussrichtung vergrößernden Querschnitt aufweist.

3. Modul (10) nach Anspruch 2, **dadurch gekennzeichnet, dass** der Zuführkanal (20) und/oder der Sammelkanal (26) im Wesentlichen einen rechteckförmigen Querschnitt mit einer Höhe und einer Breite aufweist, wobei die Höhe und/oder die Breite in Durchflussrichtung wenigstens abschnittsweise kontinuierlich abnimmt.

4. Modul (10) nach Anspruch 3, **dadurch gekennzeichnet, dass** die Höhe wenigstens abschnittsweise konstant bei abnehmender Breite ist.

5. Modul (10) nach einem der vorherigen Ansprüche, **dadurch gekennzeichnet, dass** der Zuführkanal (20) und/oder der Sammelkanal (26) zwei im Wesentlichen parallel zueinander verlaufende und wenigstens in ihren Endbereich miteinander verbundene Kanalabschnitte (20.1, 20.2) aufweist, wobei die Absorberkanäle (24) mit dem zweiten Kanalabschnitt (20.1) verbunden sind.

6. Modul (10) nach einem der vorherigen Ansprüche, **dadurch gekennzeichnet, dass** die aufeinander angeordneten Gehäuseplatten (12, 14) wenigstens weitgehend spiegelsymmetrisch zueinander ausgebildet sind.

7. Modul (10) nach einem der vorherigen Ansprüche, **dadurch gekennzeichnet, dass** Absorberkanäle (24) vorgesehen sind, die zur Vergrößerung der Oberfläche einen gebogenen, insbesondere einen ovalförmigen Querschnitt vorsehen.

8. Modul (10) nach einem der vorherigen Ansprüche, **dadurch gekennzeichnet, dass** die Querschnitte der Absorberkanäle eine ovale oder rechteckige Kontur mit einer Breite und einer Höhe aufweisen, wobei das Verhältnis Breite/Höhe im Bereich von 5/1 bis 20/1 und insbesondere im Bereich von 10/1 liegt.

9. Modul (10) nach Anspruch 4 oder 5, **dadurch gekennzeichnet, dass** Absorberkanäle (24) vorgesehen sind, die zur verbesserten Durchmischung des Wärmemittels eine in oder quer zur Strömungsrichtung verlaufende wellenartige oder geschlängelte Kontur aufweisen.

10. Modul (10) nach wenigstens einem der Ansprüche 4 bis 6, **dadurch gekennzeichnet, dass** zwischen zwei benachbart angeordneten Absorberkanälen (24) die Gehäuseplatten (12, 14) wärmemittelundicht aneinander anliegen.

11. Modul (10) nach wenigstens einem der vorhergehenden Ansprüche, **dadurch gekennzeichnet, dass** ein Rahmen (30) und/oder Rahmenabschnitte (32) zur gegenseitigen Fixierung der Gehäuseplatten (12, 14) vorgesehen sind, wobei zwischen zwei benachbarten Absorberkanälen (24) ein Rahmenabschnitt (32) vorgesehen sein kann.

12. Modul (10) nach wenigstens einem der Ansprüche 10 bis 13, **dadurch gekennzeichnet, dass** der Rahmen (30) derart ausgebildet ist, dass er die Gehäuseplatten (12, 14) an den freien Kanten einfasst und/oder einen wenigstens abschnittsweise umlaufenden Auflageabschnitt zur Auflage eines Solarglases (40) aufweist.

13. Modul (10) nach wenigstens einem der Ansprüche 10 bis 13, **dadurch gekennzeichnet, dass** die Gehäuseplatten (12, 14) eine konstante Wandstärke aufweisen und aus Kunststoff oder aus Metallblech sind.

14. Herstellverfahren für ein Solarabsorbermodul (10) nach wenigstens einem der vorhergehenden Ansprüche, **dadurch gekennzeichnet, dass** zwei Vertiefungen (16) aufweisende Gehäuseplatten (12, 14) zur Bildung von Kanälen (18) aufeinander gesetzt werden und dass die beiden Gehäuseplatten (12, 14) mittels eine gespritzten oder geschäumten Rahmen (30) und/oder mittels gespritzten oder geschäumten Rahmenabschnitten (32) dauerhaft miteinander verbunden werden.

15. Wärmetauscher (46), umfassend wenigstens zwei Solarabsorbermodul (10) nach wenigstens einem der vorhergehenden Ansprüche, **dadurch gekennzeichnet, dass** die Module (10) derart beabstandet aufeinander angeordnet werden, dass nicht nur in den Kanälen (18) der beiden Solarabsorbermodul eine Wärmemittel hindurchströmt, sondern auch ein Medium zwischen den beiden Solarabsorbermodulen (10) hindurchströmen kann.
